Europäisches Patentamt

European Patent Office

Office européen des brevets

(19)

(11) Numéro de publication : **0 100 729**
**B1**

(12) **FASCICULE DE BREVET EUROPÉEN**

(45) Date de publication du fascicule du brevet :
09.10.85

(21) Numéro de dépôt : 83401566.1

(22) Date de dépôt : 28.07.83

(51) Int. Cl.⁴ : **B 23 Q 1/16// B23Q1/30**

(54) Dispositif de basculement de pièces de grande dimension.

(30) Priorité : 29.07.82 FR 8213255

(43) Date de publication de la demande :
15.02.84 Bulletin 84/07

(45) Mention de la délivrance du brevet :
09.10.85 Bulletin 85/41

(84) Etats contractants désignés :
BE CH DE GB IT LI SE

(56) Documents cités :
DE-B- 1 220 734
DE-B- 1 221 856
FR-A- 2 390 275
US-A- 2 871 768
B.A. TAUBER: "Montage- und Schweissvorrichtun-gen", 1956, pages 194-196, 332-335, 340, 341, VEB Verlag Technik, Berlin, DE

(73) Titulaire : FRAMATOME ET CIE.
Tour Fiat 1, Place de la Coupole
F-92400 Courbevoie (FR)

(72) Inventeur : Guigon, Jean-Paul
Hameau de Varanges
F-71640 Givry (FR)
Inventeur : Beraudier, Daniel
Domaine de l'Orbize Dracy le Fort
F-71640 Givry (FR)

(74) Mandataire : Mongrédien, André et al
c/o BREVATOME 25, rue de Ponthieu
F-75008 Paris (FR)

Jouve, 18, rue St-Denis, 75001 Paris, France

## Description

L'invention concerne un dispositif de basculement de pièces de grande dimension.

Pour l'usinage de pièces de très grande dimension telles que les pièces constitutives des composants d'un réacteur nucléaire à eau sous pression, il est nécessaire de disposer de moyens permettant de les présenter dans une certaine orientation par rapport aux machines-outils utilisées.

On doit donc utiliser des dispositifs de basculement de ces pièces pour obtenir des orientations variables avec une très grande précision de positionnement.

D'autre part, ces dispositifs doivent pouvoir absorber les efforts de coupe exercés sur les pièces.

On connaît des dispositifs de basculement de pièces de très grande dimension utilisant des vérins en prise avec un support ou table, articulé autour d'axes horizontaux sur un socle de support.

Cependant de tels dispositifs ne permettent pas d'obtenir une très grande précision dans l'orientation de la pièce et ne permettent pas d'absorber un effort de coupe important.

Enfin, ces dispositifs sont très souvent complexes et encombrants, ce qui limite leur utilisation en atelier.

Le but de l'invention est donc de proposer un dispositif de basculement de pièces de grande dimension comportant un socle reposant sur le sol, une table support montée sur ce socle, mobile en rotation grâce à au moins une articulation dont l'axe est horizontal et parallèle à la table et un moyen d'entraînement en rotation de la table, ce dispositif devant permettre d'obtenir une très grande précision pour l'orientation de la pièce et une très grande stabilité quelle que soit son orientation.

Dans ce but, le dispositif comporte en outre :

un moyen de liaison entre le socle et la table relié à une partie de cette table éloignée de son axe de rotation, par une articulation à axe horizontal et au socle par une autre articulation à axe horizontal,

et des dispositifs de blocage associés à chacune des articulations de la table et du moyen de liaison articulé, constitués chacun par au moins une pièce de serrage disposée autour de l'axe de l'articulation en prise avec un moyen élastique de serrage et par un vérin hydraulique en prise avec la pièce de serrage pour le déblocage du dispositif,

la commande du moyen d'entraînement à mouvement continu de la table étant asservie à la pression d'alimentation des vérins pour éviter sa mise en fonctionnement tant que le déblocage de toutes les articulations n'est pas réalisé.

Afin de bien faire comprendre l'invention, on va maintenant décrire à titre d'exemple non limitatif, en se reportant aux figures jointes en annexe, un mode de réalisation d'un dispositif de basculement suivant l'invention destiné à mettre en position angulaire variable des pièces à usiner, par rapport à une fraiseuse-aléseuse.

La figure 1 représente une vue en élévation d'un dispositif de basculement suivant l'invention.

La figure 2 représente une demi-vue en coupe suivant AA de la figure 1.

La figure 3 représente une demi-vue en coupe suivant BB de la figure 1.

La figure 4 représente une vue en coupe par un plan perpendiculaire à l'axe d'une articulation, d'un dispositif de blocage de cette articulation.

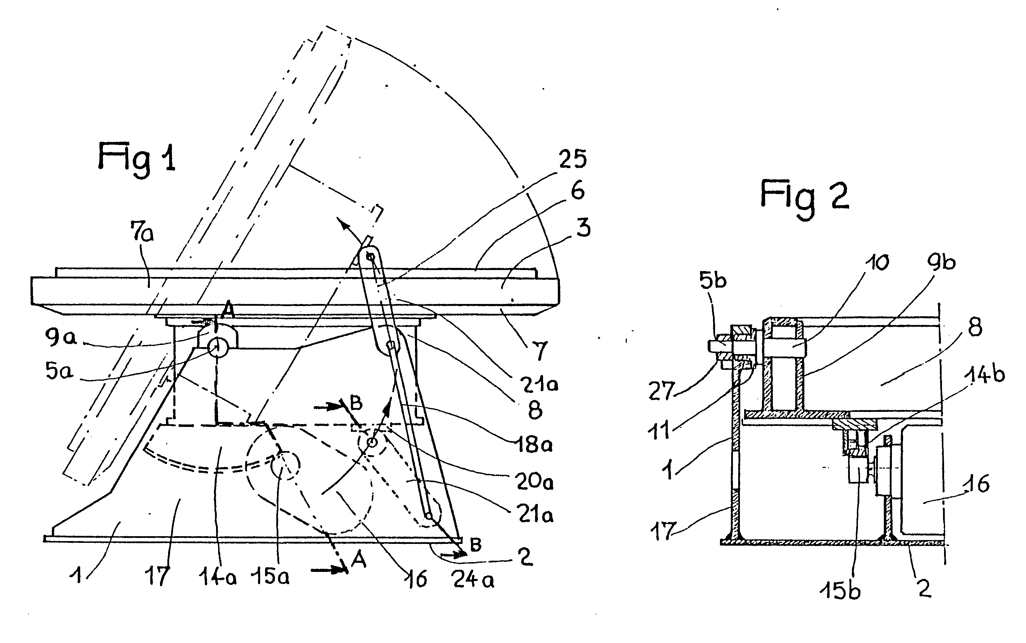

Sur la figure 1, on voit le socle 1 du dispositif de basculement fixé sur le sol par l'intermédiaire d'une base plane 2.

La table 3 montée mobile en rotation sur le socle 1 par l'intermédiaire d'articulations 5 à axe horizontal a été représentée en traits pleins dans sa position inclinée à 60° qui est sa position d'inclinaison maximale.

Cette table comporte un plateau 6 sur lequel on vient fixer la pièce à usiner, une base 7 et une partie inférieure 8 sur laquelle sont fixés les supports 9 des articulations de la table 3 sur le socle 1.

Sur la figure 2 on a représenté une demi-vue en coupe du dispositif qui est entièrement symétrique par rapport au plan vertical longitudinal de trace ZZ' sur la figure 2.

La table 3 est articulée sur le socle 1 par l'intermédiaire de deux articulations 5a et 5b dont le détail est représenté sur la figure 2. Chacune des articulations comporte un axe horizontal 10 fixé de façon rigide dans le support d'articulation 9 solidaire de la partie inférieure 8 de la table 3 et engagé dans une palier 1 reposant sur la partie supérieure du socle 1.

La partie inférieure 8 de la table porte également deux secteurs dentées symétriques 14 en prise chacun avec un pignon de sortie 15 d'un groupe motoréducteur 16. La mise en rotation du groupe motoréducteur permet de faire tourner la table entre sa position horizontale représentée en traits pleins et sa position à 60 représentée en traits interrompus.

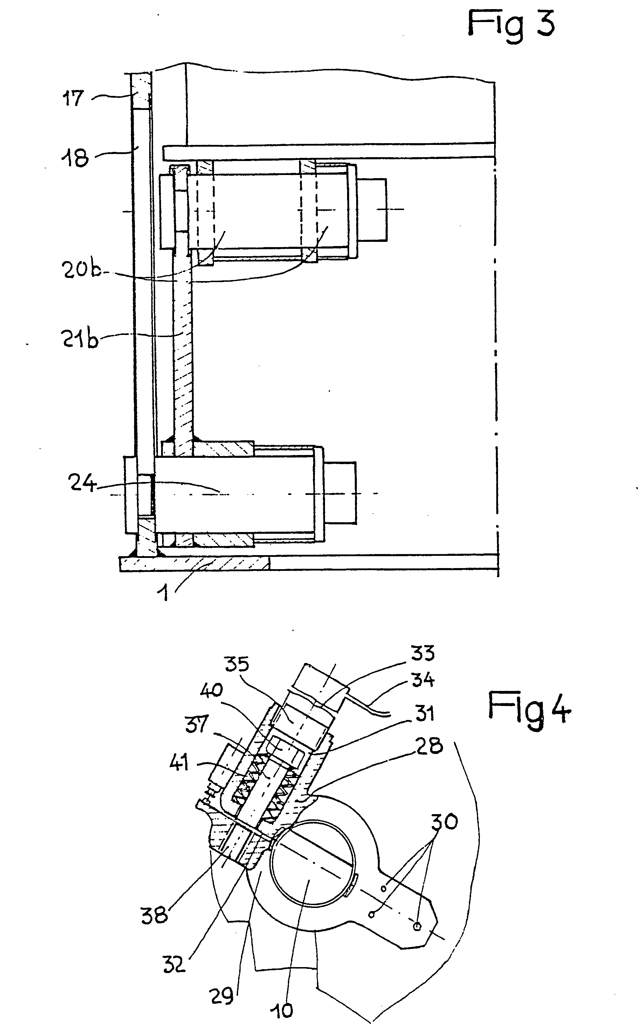

Le socle 1 comporte deux flasques latéraux 17 fixés verticalement sur la base plane 2 et dans chacun desquels est usinée une lumière 18 légèrement inclinée par rapport à la verticale (figures 1 et 3).

La partie inférieure 8 de la table porte également deux paliers d'articulation symétriques 20 dans lesquels sont montés tourillonnants des axes horizontaux solidaires chacun d'une bielle 21 à l'une de ses extrémités. L'autre extrémité de la bielle 21 est solidaire d'une pièce de guidage 24 à l'intérieur de laquelle un axe engagé dans la rainure 18 est monté tourillonnant.

De cette façon, pendant la rotation de la table, par mise en rotation du motoréducteur 16, l'extrémité de la bielle 21 reliée à la table 3 se déplace suivant un parcours circulaire 25 dont le centre correspond au centre de l'articulation 5 alors que l'autre extrémité de la bielle se déplace suivant le parcours rectiligne correspondant à la lumière 18.

La bielle constitue donc pendant le mouvement continu de la table, un moyen de liaison articulée entre le socle et la table dont le déplacement est rendu possible grâce aux articulations situées à chacune de ses extrémités. Il existe deux dispositifs articulés identiques disposés de chaque côté de la table et reliés respectivement à chacun des flasques latéraux du socle 1.

Sur la figure 4, on voit un dispositif de blocage 27 associé à l'articulation 5b représentée sur la figure 2. Ce dispositif de blocage comporte une pièce de serrage dont les parties 28 et 29 entourent l'extrémité de l'axe 10 extérieure au palier 11.

Cette pièce de serrage 28, 29 a une extrémité fixée par des vis 30 sur le flasque 17.

A l'intérieur de la partie 28 est ménagée une ouverture cylindrique 31 débouchant à l'une de ses extrémités dans l'espace 32 de faible largeur existant entre les parties 28 et 29 de la pièce de serrage.

A l'intérieur de l'ouverture cylindrique 31, à l'extrémité de celle-ci opposée l'espace 32, est fixé un vérin hydraulique 33 alimenté par une conduite 34.

Le piston 35 de ce vérin hydraulique est solidaire d'une tige 37 reliée à son extrémité opposée au piston 35 à la partie 29 de la pièce de serrage, par l'intermédiaire d'une partie filetée 38.

L'extrémité opposée de la tige 37 également filetée porte un écrou 40 venant en appui sur une série de rondelles élastiques 41 de type Belleville.

Lorsque le piston du vérin 33 est en position arrière à l'intérieur du cylindre, la position de l'écrou 40 est réglée de façon que la compression des rondelles élastiques 41 entre l'écrou 40 solidaire de la tige 37 fixée dans la partie 29 et la partie 28 entraîne un rapprochement suffisant de ces deux parties pour bloquer l'axe 10 en rotation.

Si l'on alimente le vérin hydraulique par l'intermédiaire de la conduite 34, la tige du vérin 37 écarte la partie 29 de la partie 28. L'axe 10 est alors libre en rotation.

Chacune des articulations 5a et 5b de la table est équipée d'un tel dispositif de serrage et il en est de même des articulations à chacune des extrémités des bielles 21.

Lorsque les vérins de ces dispositifs de blocage ne sont pas alimentés, la table est ainsi bloquée en quatre point sous l'effet du serrage des rondelles élastiques et sa stabilité est très grande.

Si l'on désire déplacer la table, il faut alimenter simultanément l'ensemble des vérins débloquant les articulations puis mettre en marche le motoréducteur 16.

La commande du motoréducteur est asservie à la pression d'alimentation des vérins pour qu'il soit impossible de commander la mise en marche si le déblocage de toutes les articulations n'est pas assuré.

Lorsque la table est arrivée dans sa nouvelle position, pour une opération d'usinage, on arrête le motoréducteur et l'on relâche la pression des vérins de déblocage des articulations.

La table est alors dans une nouvelle position de travail déterminée de façon extrêmement précise grâce au déplacement continu provoqué par le motoréducteur et le secteur denté.

De plus, la table est alors dans une position extrêmement stable, le blocage des articulations permettant d'absorber les efforts de coupe transmis à la pièce et à la table support.

Le dispositif suivant l'invention permet donc une très grande précision de positionnement et une très grande stabilité de la table-support dans ses positions de travail.

Le dispositif a également une très grande sûreté de fonctionnement.

L'invention ne se limite pas au mode de réalisation qui a été décrit.

C'est ainsi qu'on peut utiliser un dispositif de déplacement continu de la table différent d'un secteur denté entraîné par un pignon de sortie d'un motoréducteur.

On peut également imaginer d'autres dispositifs de liaison articulée entre la table et le socle. Par exemple, on peut imaginer l'utilisation de dispositifs articulés comportant plusieurs branches rigides articulées entre elles et articulées à leurs extrémités sur le socle et la table respectivement.

L'invention s'applique dans tous les cas où l'on désire réaliser un positionnement précis et sûr d'une pièce de très grande dimension et de très grande masse, soit pour son usinage, soit pour son déplacement ou un contrôle dimensionnel.

**Revendications**

1. Dispositif de basculement de pièces de grande dimension comportant un socle (1) reposant sur le sol, une table-support (3) montée sur ce socle, mobile en rotation grâce à au moins une articulation (5) dont l'axe est horizontal et parallèle à la table (3) et un moyen d'entraînement de la table en rotation (14, 15, 16),
caractérisé par le fait qu'il comporte en outre :
un moyen de liaison (21) entre le socle (1) et la table (3) relié à une partie de cette table (3) éloignée de son axe de rotation, par une articulation (20) à axe horizontal, et au socle (1) par une autre articulation (24) à axe horizontal,
et des dispositifs de blocage (27) associés à chacune des articulations de la table (3) et du moyen de liaison articulée (21) constitués chacun par au moins une pièce de serrage (28, 29) disposée autour de l'axe (10) de l'articulation en prise avec un moyen élastique de serrage (41) et par un vérin hydraulique (33) en prise avec la pièce de serrage (28, 29) pour le déblocage du dispositif,
la commande du moyen d'entraînement (14, 15, 16) à mouvement continu de la table (3) étant asservie à la pression d'alimentation des vérins (33) pour éviter sa mise en fonctionnement tant que le déblocage de toutes les articulations n'est pas réalisé.

2. Dispositif de basculement suivant la revendication 1,
caractérisé par le fait que le moyen d'entraînement (14, 15, 16) de la table est constitué par deux secteurs dentés (14a, 14b) solidaires de celle-ci et un motoréducteur (16) porté par le socle dont les pignons de sortie (15a, 15b) sont en prise avec les secteurs dentés (14a, 14b).

3. Dispositif de basculement suivant l'une quelconque des revendications 1 et 2,
caractérisé par le fait que le moyen de liaison articulée entre le socle (1) et la table (3) est constitué par un jeu de bielles (21a, 21b) articulé à l'une de ses extrémités sur la table (3) et portant à son autre extrémité un axe mobile en rotation par rapport au jeu de bielles (21) engagé dans une lumière rectiligne (18) portée par le socle (1), de façon qu'une des extrémités du jeu de bielles (21) relié à la table (3) se déplace suivant un parcours circulaire alors que l'autre extrémité du jeu de bielle (21) se déplace suivant un parcours rectiligne.

4. Dispositif de basculement suivant l'une quelconque des revendications 1, 2 et 3,
caractérisé par le fait que les moyens élastiques (41) en prise avec la pièce de serrage (28, 29) sont constitués par un empilement de rondelles élastiques de type Belleville.

## Claims

1. Device for tilting large-size articles, comprising a base (1) resting on the ground, a supporting table (3) mounted on this base and movable in rotation by means of at least one joint (5), the pin of which is horizontal and parallel to the table (3), and a means of driving the table in rotation (14, 15, 16),
characterised in that it also incorporates
a connection means (21) between the base (1) and the table (3), this connection means being joined to a part of this table (3) distant from its axis of rotation by means of a joint (20) with a horizontal pin and to the base (1) by means of another joint (24) with a horizontal pin,
and locking devices (27) which are associated with each of the joints of the table (3) and of the articulated connection means (21) and which each consist of at least one clamping piece (28, 29) arranged round the pin (10) of the joint and in engagement with an elastic claming means (41) and of a hydraulic jack (33) in engagement with the clamping piece (28, 29) to release the device, the control of the means (14, 15, 16) of driving the table (3) in a continuous movement being subject to the supply pressure of the jacks (33), to prevent it from being put into operation until all the joints have been released.

2. Tilting device according to Claim 1, characterised in that the means (14, 15, 16) of driving the table consist of two toothed quadrants (14a, 14b) integral with the latter and of a geared motor (16) which is carried by the base and the output pinions (15a, 15b) of which are in engagement with the toothed quadrants (14a, 14b).

3. Tilting device according to either one of Claims 1 and 2,
characterised in that the articulated connection means between the base (1) and the table (3) consists of a set of connecting rods (21a, 21b) articulated at one of its ends on the table (3) and carrying at its other end a pin movable in rotation relative to the set of connecting rods (21) and engaged in a straight slot (18) located in the base (1), so that one of the ends of the set of connecting rods (21) connected to the table (3) moves in a circular path, whilst the other end of the set of connecting rods (21) moves in a straight path.

4. Tilting device according to any one of Claims 1, 2 and 3,
characterised in that the elastic means (41) in engagement with the clamping piece (28, 29) consist of a stack of elastic washers of the Belleville type.

## Patentansprüche

1. Kippvorrichtung für Werkstücke großer Abmessungen, mit einem auf dem Boden ruhenden Untergestell (1), mit einem auf dem Untergestell gelagerten Tragtisch (3), der durch wenigstens eine Anlenkung (5) drehbar ist, deren Achse waagerecht und zum Tisch (3) parallel ist, und mit einer Drehantriebseinrichtung (14, 15, 16) für den Tisch, gekennzeichnet,
durch eine zwischen dem Untergestell (1) und dem Tisch (3) angeordnete Verbindungseinrichtung (21), die über eine Anlenkung (20) mit waagerechter Achse mit einem von der Drehachse des Tischs (3) entfernten Teil des Tischs (3) und über eine weitere Anlenkung (24) mit waagerechter Achse mit dem Untergestell (1) verbunden ist, und
durch Blockiervorrichtungen (27), die jeder der Anlenkungen des Tischs (3) und der angelenkten Verbindungseinrichtung (21) zugeordnet sind und von denen jede gebildet ist durch ein Klemmstück (28, 29), das um die Achse (10) der Anlenkung angeordnet ist und mit einer elastischen Klemmeinrichtung (41) in Verbindung steht, und durch einen hydraulischen Stellzylinder (33), der zum Lösen der Vorrichtung mit dem Klemmstück (28, 29) in Eingriff steht,
wobei die Steuerung der mit kontinuierlicher Bewegung des Tischs (3) arbeitenden Antriebseinrichtung (14, 15, 16) in Abhängigkeit vom Speisedruck der Stellzylinder (13) geregelt wird, um ihre Inbetriebsetzung zu vermeiden, solange das Lösen aller Anlenkungen nicht erfolgt ist.

2. Kippvorrichtung nach Anspruch 1, dadurch gekennzeichnet, daß die Antriebseinrichtung (14, 15, 16) des Tischs aus zwei mit diesem fest verbundenen Zahnsegmenten (14a, 14b) und aus einem vom Untergestellt getragenen Motoruntersetzungsgetriebe (16) besteht, dessen Ausgangsritzel (15a, 15b) mit den Zahnsegmenten (14a, 14b) in Eingriff stehen.

3. Kippvorrichtung nach einem der Ansprüche 1 und 2,
dadurch gekennzeichnet, daß die zwischen dem Untergestell (1) und dem Tisch (3) angelenkte Verbindungseinrichtung aus einem Satz von Lenkern (21a, 21b) besteht, die an einem ihrer Enden am Tisch angelenkt sind und an ihrem anderen Ende eine gegenüber dem Satz von Lenkern (21) drehbare Achse tragen, die in ein im Untergestell (1) ausgebildetes Langloch (18) derart eingesetzt ist, daß eines der Enden des mit dem Tisch (3) verbundenen Satzes von Lenkern (21) sich auf einer Kreisbahn bewegt, während das andere Ende des Satzes von Lenkern (21) sich auf einer geradlinigen Bahn bewegt.

4. Kippvorrichtung nach einem der Ansprüche 1, 2 und 3,
dadurch gekennzeichnet, daß die mit dem Klemmstück (28, 29) in Eingriff stehende elastische Einrichtung (41) aus einem Stapel von elastischen Scheiben nach Art von Tellerfedern besteht.

Fig 2

Fig 1

Fig 3

Fig 4

2